# EUROPEAN PATENT APPLICATION

(11) **EP 0 794 649 A1**
(43) Date of publication of application: **10.09.1997**
(21) Application number: 97200628.2
(22) Date of filing: 04.03.1997
(51) Int. Cl.: H04M 3/38, H04M 3/36, H04M 15/00, H04Q 7/38

(54) **Use monitor for communication system**

(30) Priority: 06.03.1996 NL 1002543
(71) Applicant: Koninklijke PTT Nederland N.V., 9726 AE Groningen (NL)
(72) Inventor: de Jager, Paul, 9723 AC Groningen (NL); van Leimpd, Egidius Petrus Maria, 9723 AC Groningen (NL)
(74) Representative: Beitsma, Gerhard Romano

(57) **Abstract**

Telecommunication network comprising, for the purpose of detecting fraudulent use, means for registering numbers of exchanged signalling codes per subscriber or group of subscribers. The network further comprises means for evaluating the registered numbers of signalling codes on the basis of one or more evaluation processes which are to be carried out by said evaluation means, resulting in an evaluation code. Finally, the network comprises means for producing an alarm as soon as the evaluation code assumes a value indicating abnormal use deviating from the expectation profile.

## Description

### A. Background of the invention

The invention relates to a telecommunication network.

A problem which manifests itself in mobile telecommunication networks in particular is the fraudulent use of the network, where use is made of the network without the bills which are presented to the user being paid. Particularly in cases of foul play the connection is usually used intensively, since the network operator only resorts to suspending the service after a relatively long period of time. Since intentional fraud is usually accompanied by intensive use, network operators attempt to track fraudulent use by so-called high use detection. For example, subscribers are detected - using Call Detail Records (CDRs)produced in the switch - whose call costs per period (for example per day) exceed a certain amount.

A number of drawbacks are associated with high use detection as a means for fraud detection. The main drawback would seem to be that the monitoring of use, as part of the billing process, is carried out in a batch-wise manner (see, if desired, a European patent granted earlier to the applicant concerning the - batch-wise - polling of CDRs). The consequence is that possible high use cannot be registered in real time. In the case that the call is being made abroad, the detection of high use functions even more slowly, since the (high) use information must then be transmitted to the home operator before it can be processed.

### B. Summary of the invention

The invention provides an improvement of the use monitoring function in communication networks. The invention is based on the insight that, during each (mobile) connection, signalling messages are exchanged. In GSM, use is made of so-called triplets, which are used in both national and international connections and, in particular, serve for the authentication of the users with respect to the communication system. Such triplets are always exchanged at the beginning of each connection. In connections with foreign countries a number of triplets (for example, three), retrieved from the home operator at the beginning of the connection, are used on setting up each new call; if the triplets are used up, new ones are timely retrieved from the home operator. For each new connection, (at least) one triplet is "used up". This use is in real time and can be monitored with relatively simple means, in foreign connections also.

### C. Examples of embodiment

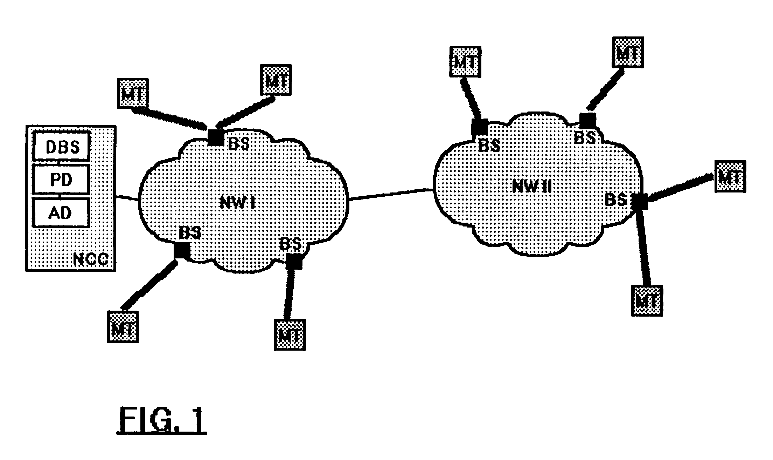

Fig. 1 diagrammatically shows an implementation example of the invention. Two mobile networks NW I and NW II, which are connected with each other, are shown. NW I represents the home network, NW II represents the foreign network. Mobile terminals MT can establish a connection to the networks via base stations BS. During the setting up of a connection, but sometimes also while maintaining a connection, authentication codes are exchanged between the network and the terminal for preventing undesired connections. On the part of the network, the authentication codes required thereto are retrieved from a database DBS which forms part of the network control centre NCC. Said NCC also contains, for the realisation of the invention, a registration device ("policing device") PD and an alarm device AD. Retrievals of authentication codes at the DBS are carried out via the PD. The number of codes, for example per day, which are retrieved per subscriber terminal, are subjected to an evaluation process in the PD. In said evaluation process, the triplet use profile is compared on the one hand to a positive standard profile which - given the kind of user (large business, small business, private) - represents call behaviour which can be expected as normal, and, on the other hand, one or more negative profiles which - according to earlier experience - represent "abnormal" call behaviour. Said profiles are stored in the device PD. In the event of a low correlation of the detected profile with respect to the positive standard profile and a high correlation with respect to the negative standard profile, the device AD is activated and the call behaviour is subjected to further examination.

It is observed that the authentication codes are queried on all connections which are requested by terminals registered in the DBS. Also, if connections are set up via NW II (foreign), in which a terminal is involved which is registered at NW I (home operator), the authentication code of said terminal is retrieved from the (home) DBS. Since in most cases the query intensity of the authentication codes (triplets) is a good measure for the call costs, said call costs can be screened in real time in this way, so that the network operator can take decisive action against fraudsters.

### D. References

EP 0577177 [Koninklijke PTT Nederland NV]

## Claims

1. Telecommunication network, comprising means for setting up, maintaining and processing connections between subscriber terminals, in which, during the set up, maintenance or processing of the connections, signalling codes are exchanged between said means mutually, or between said means and the subscriber terminals, characterised in that fraud detection means (PD), per subscriber terminal (MT) or group of subscriber terminals, register the profile of the numbers of exchanged signalling codes and compare said profiles with one or more standard profiles, in which, dependent upon the result of the comparison, an alarm device (AD) is activated.

2. Telecommunication network according to Claim 1, characterised in that the said signalling codes comprise authentication codes related to the authentication of the subscriber terminals with respect to the network.

3. Telecommunication network according to Claim 2, characterised in that the authentication codes are retrieved from a database (DBS) in which they are stored preceding and/or during a connection, and that said fraud detection means register said authentication code queries.
